# EUROPEAN PATENT SPECIFICATION

(11) **EP 3 026 094 B1**
(45) Date of publication and mention of the grant of the patent: **19.07.2017**
(21) Application number: 14195402.4
(22) Date of filing: 28.11.2014
(51) Int. Cl.: C09K 11/06, H05B 33/14

(54) **Novel materials for the photo-crosslinking of conjugated polymers for application in organic optoelectronics**
Neuartige Materialien zur Photovernetzung von konjugierten Polymeren zur Anwendung in organischer Optoelektronik
Nouveaux matériaux pour la photoréticulation de polymères conjugués pour application dans des dispositifs optoélectroniques organiques

(43) Date of publication of application: 01.06.2016
(73) Proprietor: BASF SE, 67056 Ludwigshafen am Rhein (DE); InnovationLab GmbH, 69115 Heidelberg (DE)
(72) Inventor: JELTSCH, Krischan Fabian, 68161 Mannheim (DE); WEITZ, Thomas, 81545 München (DE); SCHELKLE, Korwin Maria, 68163 Mannheim (DE); HAMBURGER, Manuel, 68199 Mannheim (DE)
(74) Representative: BASF IP Association

(56) References cited:
- EP-A1- 2 315 291
- US-A1- 2002 106 529
- US-A1- 2008 074 039
- GUANGLONG WU ET AL: "Synthesis and characterization of photo-crosslinkable polyfluorene with acrylate side-chains", JOURNAL OF APPLIED POLYMER SCIENCE, vol. 100, no. 3, 5 May 2006 (2006-05-05), pages 2336-2342, XP055186777, ISSN: 0021-8995, DOI: 10.1002/app.23044
- ESTHER SCHELER ET AL: "Tailoring fluorene-based oligomers for fast photopatterning", JOURNAL OF MATERIALS CHEMISTRY, vol. 19, no. 20, 1 January 2009 (2009-01-01), page 3207, XP055186880, ISSN: 0959-9428, DOI: 10.1039/b822894a
- ESTHER SCHELER ET AL: "Synthesis and Properties of Alternating Fluorene-Based Oligomers for Sub- m Photopatterning", MACROMOLECULAR CHEMISTRY AND PHYSICS, vol. 211, no. 19, 1 October 2010 (2010-10-01), pages 2081-2089, XP055186884, ISSN: 1022-1352, DOI: 10.1002/macp.201000165
- RUSU ET AL: "Polyamides containing extended pendant groups of dimethylaminocinnamate type", REVUE ROUMAINE DE CHIMIE - ROMANIAN JOURNAL OF CHEMISTRY, EDITURA ACADEMIEI ROMANE, RO, vol. 49, no. 6, 1 January 2004 (2004-01-01), pages 507-513, XP008176208, ISSN: 0035-3930
- Elena Rusu ET AL: "Photosensitive Monomers and Polymers Derived from Glycidyl Cinnamate", Iranian Polymer Journal, 1 January 1998 (1998-01-01), pages 157-162, XP055186899, Retrieved from the Internet: URL:http://journal.ippi.ac.ir/manuscripts/ ipjE98070303.pdf [retrieved on 2015-04-30]
- JIN H. AHN ET AL: "Blue organic light emitting devices with improved colour purity and efficiency through blending of poly(9,9-dioctyl-2,7-fluorene) with an electron transporting material", JOURNAL OF MATERIALS CHEMISTRY, vol. 17, no. 29, 1 January 2007 (2007-01-01), page 2996, XP055187068, ISSN: 0959-9428, DOI: 10.1039/b700047b

## Description

The invention relates to polymers having fluorene-diyl groups in the backbone and specific cinnamate-based cross-linkers as well as to the corresponding monomers. The invention further relates to a method for cross-linking said polymers as well as to the corresponding cross-linked polymers. The invention further relates to electronic devices comprising said cross-linked polymers.

Organic light-emitting diodes (OLEDs) have attracted much interest because of their potential low-cost fabrication, energy efficiency and semi-transparency. While physical vapor deposition is still the method of choice for complex multilayer OLED architectures, the evaporation process only works for small molecule compounds. Transferring such evaporation tools to rapid and low-cost reel-to-reel processes is clearly non-trivial. Solution-based approaches bear the potential to circumvent these drawbacks and allow large-area device fabrication. However, they present additional challenges in the preparation of multilayer architectures. One key requirement for these processes is the application of subsequent layers without dissolving previously deposited ones. To meet this requirement, different approaches have been developed, such as the "orthogonal solvent" approach, transformation of soluble precursors after deposition as well as solubility modulation by photo-crosslinking or thermal crosslinking reactions.

E. Scheler et al., J. Mater. Chem, 2009, 19, 3207, recites fluorene-based oligomers for photopatterning comprising acrylate photocrosslinkable side-chain groups. EP 2308910 discloses light-emitting devices using polymers having fluorene-diyl groups in the backbone and vinyl-based cross-linkers.

WO 2010/097155 discloses the cross-linking of polymers having aldehyde groups as well as the use of the cross-linked polymers in electronic devices, such as OLEDs.

WO 2005/083812 discloses the cross-linking of oxetane-functionalized, organic semiconductors and conductors initiated by irradiation in the presence of an onium compound.

X.-C. Li et al., Synthetic Metals 1997, 84, 437-438 describes poly(methacrylate) copolymers bearing a UV-sensitive cross-linkable cinnamate unit as well as their application in light-emitting devices.

Y.-D. Zhang et al., J. Mater. Chem. 2002, 12, 1703-1708 describes photo-crosslinkable cinnamate-functionalized methacrylate copolymers as well as their application in organic light-emitting diodes.

The cinnamate groups disclosed in the two last-mentioned publications do not bear an amino group on its phenyl ring.

It is a continuing objective to provide novel materials for the photo-crosslinking of conjugated polymers for application in organic optoelectronics which offer advantages over the known compounds.

Accordingly, in one aspect of the invention there is provided a polymer of the formula (I) or (II), 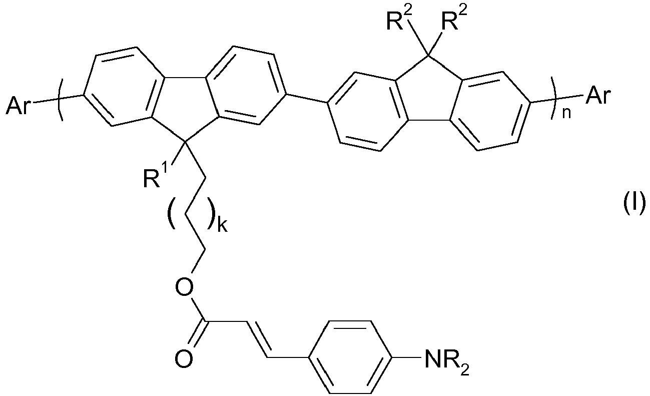 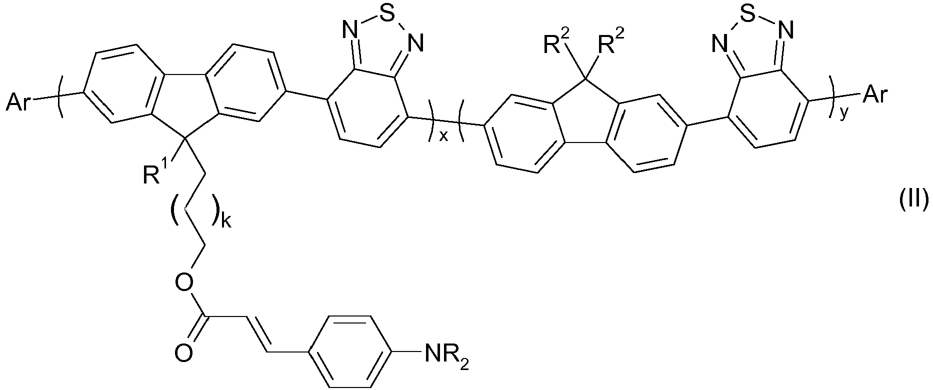 wherein
- each R: is independently a linear or branched C₁-C₁₀-alkyl, which is unsubstituted or substituted with 1, 2 or 3 substituents selected from the group consisting of halogen, CN, NO₂, OH, O(C₁-C₄-alkyl), NH₂, NH(C₁-C₄-alkyl), N(C₁-C₄-alkyl)₂, and phenyl; or phenyl, which is unsubstituted or substituted with 1, 2 or 3 substituents selected from the group consisting of halogen, CN, NO₂, OH, O(C₁-C₄-alkyl), NH₂, NH(C₁-C₄-alkyl), N(C₁-C₄-alkyl)₂, C₁-C₄-alkyl, and CF₃;
- R¹: is a linear or branched C₁-C₁₀-alkyl, which is unsubstituted or substituted with 1, 2 or 3 substituents selected from the group consisting of halogen, CN, NO₂, OH, O(C₁-C₄-alkyl), NH₂, NH(C₁-C₄-alkyl), N(C₁-C₄-alkyl)₂, and phenyl;
- each R²: is independently a linear or branched C₁-C₁₀-alkyl, which is unsubstituted or substituted with 1, 2 or 3 substituents selected from the group consisting of halogen, CN, NO₂, OH, O(C₁-C₄-alkyl), NH₂, NH(C₁-C₄-alkyl), N(C₁-C₄-alkyl)₂, and phenyl;
- each Ar: is independently phenyl, which is unsubstituted or substituted with 1, 2 or 3 substituents selected from the group consisting of halogen, CN, NO₂, OH, O(C₁-C₄-alkyl), NH₂, NH(C₁-C₄-alkyl), N(C₁-C₄-alkyl)₂, C₁-C₄-alkyl, and CF₃; biphenyl, which is unsubstituted or substituted with 1, 2 or 3 substituents selected from the group consisting of halogen, CN, NO₂, OH, O(C₁-C₄-alkyl), NH₂, NH(C₁-C₄-alkyl), N(C₁-C₄-alkyl)₂, C₁-C₄-alkyl, and CF₃; or naphthyl, which is unsubstituted or substituted with 1, 2 or 3 substituents selected from the group consisting of halogen, CN, NO₂, OH, O(C₁-C₄-alkyl), NH₂, NH(C₁-C₄-alkyl), N(C₁-C₄-alkyl)₂, C₁-C₄-alkyl, and CF₃;
- k: is an integer from 1 to 8;
- n: is an integer from 5 to 1000;
- x: is an integer from 3 to 500;
- y: is an integer from 3 to 500.

The cinnamate-based cross-linkers used in the present invention readily undergo [2+2] cycloaddition when exposed to UV irradiation. Consequently, the present invention provides access to photo-crosslinkable conjugated polymers. The present approach allows for spatially resolved structuring. In contrast to other photo-crosslinking protocols, cinnamates do not require additives such as photoacids, which makes them attractive for a wide range of applications. The optical properties of the amino-substituted cinnamates can easily be tailored to external demands by varying the substituents on the amino group.

Furthermore, the polymers of the present invention can be used as emitting layer in OLEDs. The amino group, in particular a dialkyl amino group, on the cinnamate shifts the absorption beyond 350 nm in order to minimize photochemical degradation upon irradiation. Moreover, the polymers of the present invention can be used to fabricate solution-processed OLEDs. The presence of the amino group on the phenyl ring of the cinnamate increases the solubility of the polymer to which it is attached compared to the solubility of a polymer having a cinnamate-based cross-linker without an amino group on the phenyl ring.

The polymer of the formula (II) can be a block copolymer or a statistical copolymer. In one embodiment, the polymer of the formula (II) is a block copolymer. In a preferred embodiment, the polymer of the formula (II) is a statistical copolymer.

Preferred are polymers of the formula (I) or (II) wherein each R is independently a linear or branched C₁-C₁₀-alkyl, which is unsubstituted.
More preferred are polymers of the formula (I) or (II) wherein each R is independently a linear or branched C₁-C₆-alkyl, which is unsubstituted.
Even more preferred are polymers of the formula (I) or (II) wherein each R is n-C₄H₉.

Preferred are polymers of the formula (I) or (II) wherein R¹ is a linear or branched C₁-C₁₀-alkyl, which is unsubstituted.
More preferred are polymers of the formula (I) or (II) wherein R¹ is a linear or branched C₁-C₄-alkyl, which is unsubstituted.
Even more preferred are polymers of the formula (I) or (II) wherein R¹ is CH₃.

Preferred are polymers of the formula (I) or (II) wherein each R² is independently a linear or branched C₁-C₁₀-alkyl, which is unsubstituted.
More preferred are polymers of the formula (I) or (II) wherein each R² is independently a linear or branched C₅-C₁₀-alkyl, which is unsubstituted.
Even more preferred are polymers of the formula (I) or (II) wherein each R² is CH₂CH(C₂H₅)(n-C₄H₉).

Preferred are polymers of the formula (I) or (II) wherein each Ar is independently phenyl, which is unsubstituted or substituted with 1 or 2 substituents selected from the group consisting of CN, NO₂, O(C₁-C₄-alkyl), N(C₁-C₄-alkyl)₂, C₁-C₄-alkyl, and CF₃; unsubstituted biphenyl; or unsubstituted naphthyl.
More preferred are polymers of the formula (I) or (II) wherein each Ar is independently phenyl, which is unsubstituted or substituted with 1 or 2 substituents selected from the group consisting of CN, O(C₁-C₄-alkyl), N(C₁-C₄-alkyl)₂, C₁-C₄-alkyl, and CF₃.
Even more preferred are polymers of the formula (I) or (II) wherein each Ar is C₆H₅.

Preferred are polymers of the formula (I) or (II) wherein k is an integer from 1 to 4.
More preferred are polymers of the formula (I) or (II) wherein k is 1 or 2.
Even more preferred are polymers of the formula (I) or (II) wherein k is 1.

Preferred are polymers of the formula (I) wherein n is an integer from 10 to 1000.
More preferred are polymers of the formula (I) wherein n is an integer from 10 to 600.
Even more preferred are polymers of the formula (I) wherein n is an integer from 10 to 400.

Preferred are polymers of the formula (II) wherein x is an integer from 5 to 500.
More preferred are polymers of the formula (II) wherein x is an integer from 5 to 300.
Even more preferred are polymers of the formula (II) wherein x is an integer from 5 to 200.

Preferred are polymers of the formula (II) wherein y is an integer from 5 to 500.
More preferred are polymers of the formula (II) wherein y is an integer from 5 to 300.
Even more preferred are polymers of the formula (II) wherein y is an integer from 5 to 200.

Preferred are polymers of the formula (II) wherein the ratio of x to y is in the range of from 0.7 to 1.5.
More preferred are polymers of the formula (II) wherein the ratio of x to y is in the range of from 0.8 to 1.2.
Even more preferred are polymers of the formula (II) wherein the ratio of x to y is in the range of from 0.9 to 1.1.
Particularly preferred are polymers of the formula (II) wherein the ratio of x to y is 1.0.

Preferred are polymers of the formula (I) or (II) wherein
- each R: is independently a linear or branched C₁-C₁₀-alkyl, which is unsubstituted;
- R¹: is a linear or branched C₁-C₁₀-alkyl, which is unsubstituted;
- each R²: is independently a linear or branched C₁-C₁₀-alkyl, which is unsubstituted;
- each Ar: is independently phenyl, which is unsubstituted or substituted with 1 or 2 substituents selected from the group consisting of CN, NO₂, O(C₁-C₄-alkyl), N(C₁-C₄-alkyl)₂, C₁-C₄-alkyl, and CF₃; unsubstituted biphenyl; or unsubstituted naphthyl;
- k: is an integer from 1 to 4;
- n: is an integer from 10 to 1000;
- x: is an integer from 5 to 500;
- y: is an integer from 5 to 500.

More preferred are polymers of the formula (I) or (II) wherein
- each R: is independently a linear or branched C₁-C₆-alkyl, which is unsubstituted;
- R¹: is a linear or branched C₁-C₄-alkyl, which is unsubstituted;
- each R²: is independently a linear or branched C₅-C₁₀-alkyl, which is unsubstituted;
- each Ar: is independently phenyl, which is unsubstituted or substituted with 1 or 2 substituents selected from the group consisting of CN, O(C₁-C₄-alkyl), N(C₁-C₄-alkyl)₂, C₁-C₄-alkyl, and CF₃;
- k: is 1 or 2;
- n: is an integer from 10 to 600;
- x: is an integer from 5 to 300;
- y: is an integer from 5 to 300.

Even more preferred are polymers of the formula (I) or (II) wherein
- each R: is n-C₄H₉;
- R¹: is CH₃;
- each R²: is CH₂CH(C₂H₅)(n-C₄H₉);
- each Ar: is C₆H₅;
- k: is 1;
- n: is an integer from 10 to 400;
- x: is an integer from 5 to 200;
- y: is an integer from 5 to 200.

In one embodiment the polymer of the invention is a polymer of the formula (I).

In another embodiment the polymer of the invention is a polymer of the formula (II).

The polymer of the formula (I) or (II) preferably has a number average molecular weight (Mₙ) in the range of from 10 to 200 kg/mol, more preferably 10 to 100 kg/mol, even more preferably 12 to 100 kg/mol.

The polymer of the formula (I) or (II) preferably has a weight average molecular weight (M_{w}) in the range of from 10 to 200 kg/mol, more preferably 10 to 100 kg/mol, even more preferably 12 to 100 kg/mol.

The polymer of the formula (I) or (II) preferably has a polydispersity index (PDI) in the range of from 2.00 to 3.00, more preferably 2.10 to 3.00, even more preferably 2.10 to 2.90.

Number average molecular weights (Mₙ), weight average molecular weights (M_{w}), and polydispersity indexes (PDI) were determined by gel permeation chromatography (GPC) as described further below.

In a further aspect of the invention there is provided a method for cross-linking a polymer of the formula (I) or (II) as defined herein, comprising the following steps:
(i) providing a polymer of the formula (I) or (II) as defined herein;
(ii) irradiating the polymer of step (i) with light of a wavelength in the range of from 320 to 400 nm to obtain a cross-linked polymer.

Step (ii) is preferably carried out with light of a wavelength in the range of from 350 to 380 nm.

In one embodiment the method further comprises the following step:
(iii) removing polymers which were not cross-linked or which were only cross-linked to a small degree by rinsing with one or more solvents.

Examples of solvents that can be used in step (iii) are THF, toluene, or chloroform.

In a further aspect of the invention there is provided a cross-linked polymer obtainable by the method described herein.

Preferred, more preferred, even more preferred and particularly preferred cross-linked polymers are the ones obtainable from the respective preferred, more preferred, even more preferred and particularly preferred polymers of the formula (I) or (II).

In a further aspect of the invention there is provided a monomer of the formula (III), 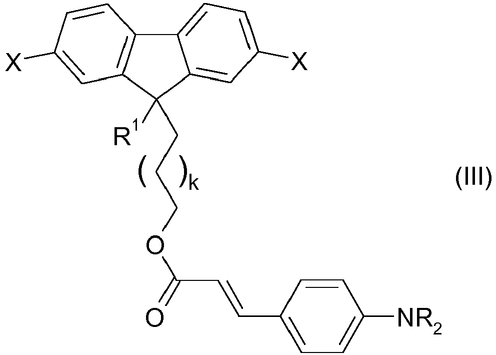 wherein
- each X: is independently halogen or OS(O)₂CF₃;
- each R: is independently a linear or branched C₁-C₁₀-alkyl, which is unsubstituted or substituted with 1, 2 or 3 substituents selected from the group consisting of halogen, CN, NO₂, OH, O(C₁-C₄-alkyl), NH₂, NH(C₁-C₄-alkyl), N(C₁-C₄-alkyl)₂, and phenyl; or phenyl, which is unsubstituted or substituted with 1, 2 or 3 substituents selected from the group consisting of halogen, CN, NO₂, OH, O(C₁-C₄-alkyl), NH₂, NH(C₁-C₄-alkyl), N(C₁-C₄-alkyl)₂, C₁-C₄-alkyl, and CF₃;
- R¹: is a linear or branched C₁-C₁₀-alkyl, which is unsubstituted or substituted with 1, 2 or 3 substituents selected from the group consisting of halogen, CN, NO₂, OH, O(C₁-C₄-alkyl), NH₂, NH(C₁-C₄-alkyl), N(C₁-C₄-alkyl)₂, and phenyl;
- k: is an integer from 1 to 8.

Preferred are monomers of the formula (III) wherein each X is independently Cl, Br, I, or OS(O)₂CF₃.
More preferred are monomers of the formula (III) wherein each X is independently Br, I, or OS(O)₂CF₃.
Even more preferred are monomers of the formula (III) wherein each X is Br.

Preferred, more preferred, even more preferred and particularly preferred monomers of the formula (III) are the ones leading to the respective preferred, more preferred, even more preferred and particularly preferred polymers of the formula (I) or (II).

Preferred are monomers of the formula (III) wherein
- each X: is independently Cl, Br, I, or OS(O)₂CF₃;
- each R: is independently a linear or branched C₁-C₁₀-alkyl, which is unsubstituted;
- R¹: is a linear or branched C₁-C₁₀-alkyl, which is unsubstituted;
- k: is an integer from 1 to 4.

More preferred are monomers of the formula (III) wherein
- each X: is independently Br, I, or OS(O)₂CF₃;
- each R: is independently a linear or branched C₁-C₆-alkyl, which is unsubstituted;
- R¹: is a linear or branched C₁-C₄-alkyl, which is unsubstituted;
- k: is 1 or 2.

Even more preferred are monomers of the formula (III) wherein
- each X: is Br;
- each R: is n-C₄H₉;
- R¹: is CH₃;
- k: is 1.

In a further aspect of the invention there is provided an electronic device comprising the cross-linked polymer described herein.

In one embodiment the electronic device is an organic light-emitting diode (OLED).

Polymers of the formula (I) or (II) can, for example, be prepared by Suzuki polymerization. Suitable reaction conditions are known to a person skilled in the art and can also be found in e.g. M. Ranger, D. Rondeau, M. Leclerc, Macromolecules 1997, 30, 7686-7691.

The Suzuki polymerization can, for example, be carried out in the presence of a suitable catalyst, in the presence of a suitable base, in the presence of a suitable solvent, and optionally in the presence of suitable additives.

An example of a suitable catalyst for the Suzuki polymerization is Pd(PPh₃)₄.

Examples of suitable bases for the Suzuki polymerization are Na₂CO₃, K₂CO₃, or Cs₂CO₃,

Examples of suitable solvents for the Suzuki polymerization are THF, water, or THF/water mixtures.

Examples of suitable additives for the Suzuki polymerization are phase transfer catalysts. An example of a suitable phase transfer catalyst is aliquat 336.

The Suzuki polymerization can, for example, be carried out at temperatures in the range of from 40 to 100 °C, preferably 50 to 80 °C.

After the Suzuki polymerization has been carried out to the desired degree, the Ar end groups can, for example, be introduced by adding an aryl boronic acid, ArB(OH)₂, optionally together with fresh catalyst, then stirring for some time, then adding an aryl bromide, ArBr, optionally together with fresh catalyst, and then again stirring for some time.

Polymers of the formula (I) can, for example, be prepared from monomers of the formula (III) as defined herein and from monomers of the formula (IV): 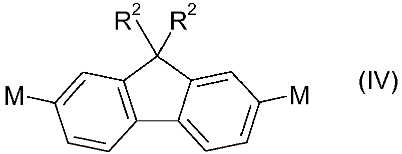 wherein R² is as defined in the respective polymer of the formula (I), and wherein M is a boronic acid group or a suitable boronic ester group.

Preference is given to monomers of the formula (IV) wherein M is B(OH)₂ or B[OC(CH₃)₂C(CH₃)₂O].
Particular preference is given to monomers of the formula (IV) wherein M is B[OC(CH₃)₂C(CH₃)₂O].

Accordingly, particularly preferred monomers of the formula (IV) are monomers of the formula (IVa):

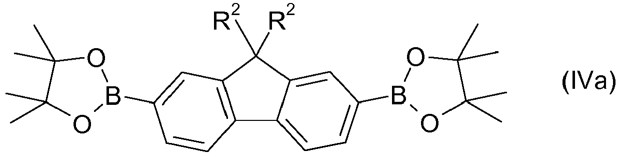

Preferred, more preferred, even more preferred and particularly preferred monomers of the formula (IV) are the ones leading to the respective preferred, more preferred, even more preferred and particularly preferred polymers of the formula (I).

Polymers of the formula (II) can, for example, be prepared from monomers of the formula (III) as defined herein, from monomers of the formula (V), and from monomers of the formula (VI).

Monomers of the formula (V): 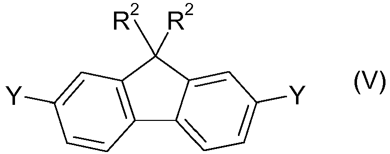 wherein R² is as defined in the respective polymer of the formula (II), and wherein Y is halogen or OS(O)₂CF₃.

Preference is given to monomers of the formula (V) wherein Y is Cl, Br, I, or OS(O)₂CF₃. Particular preference is given to monomers of the formula (V) wherein Y is Br, I, or OS(O)₂CF₃. Very particular preference is given to monomers of the formula (V) wherein Y is Br.

Preferred, more preferred, even more preferred and particularly preferred monomers of the formula (V) are the ones leading to the respective preferred, more preferred, even more preferred and particularly preferred polymers of the formula (II).

Monomers of the formula (VI): 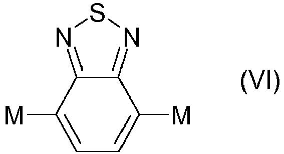 wherein M is a boronic acid group or a suitable boronic ester group.

Preference is given to monomers of the formula (VI) wherein M is B(OH)₂ or B[OC(CH₃)₂C(CH₃)₂O].
Particular preference is given to monomers of the formula (VI) wherein M is B[OC(CH₃)₂C(CH₃)₂O].

Accordingly, particularly preferred monomers of the formula (VI) are monomers of the formula (VIa):

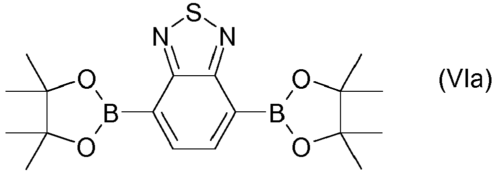

Preferred, more preferred, even more preferred and particularly preferred monomers of the formula (VI) are the ones leading to the respective preferred, more preferred, even more preferred and particularly preferred polymers of the formula (II).

A representative procedure for the preparation of a specific example of a polymer of the formula (I) by Suzuki polymerization is given in Scheme A:

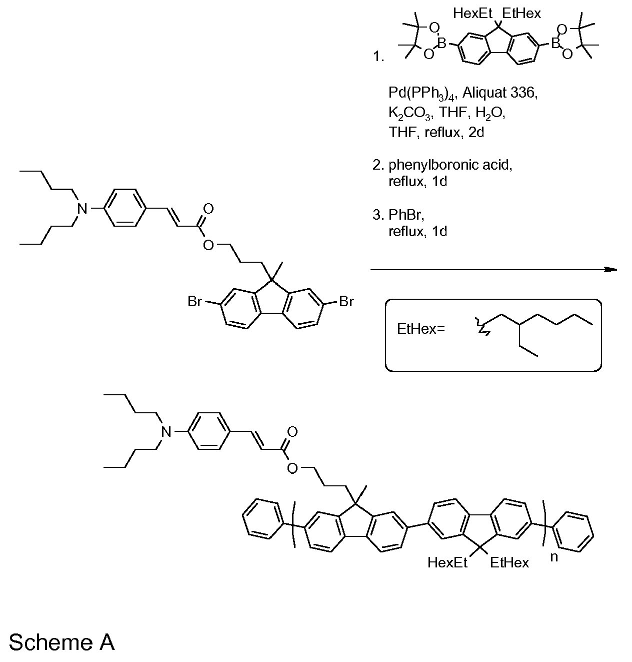

5 A representative procedure for the preparation of a specific example of a polymer of the formula (II) by Suzuki polymerization is given in Scheme B:

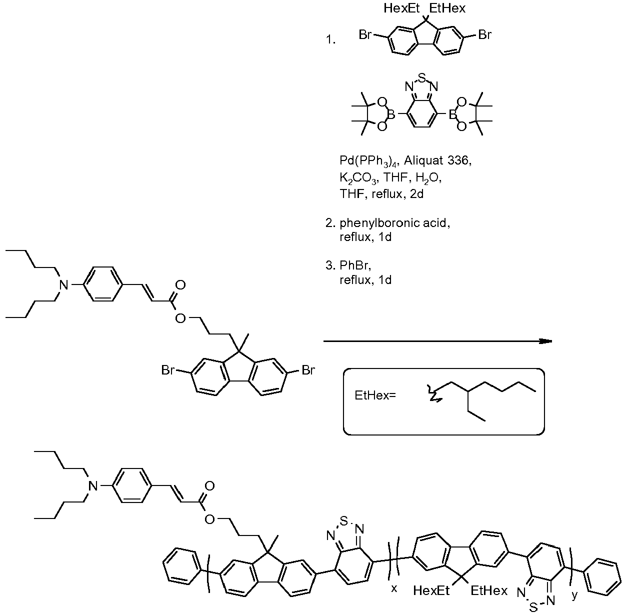

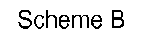

The monomers of the formulae (III), (IV), (V), and (VI) are either commercially available or they can be prepared by methods known to a person skilled in the art, see e.g. M. Ranger, D. Rondeau, M. Leclerc, Macromolecules 1997, 30, 7686-7691.

A representative sequence and representative procedures for the preparation of a specific example of a monomer of the formula (III) is given in Scheme C:

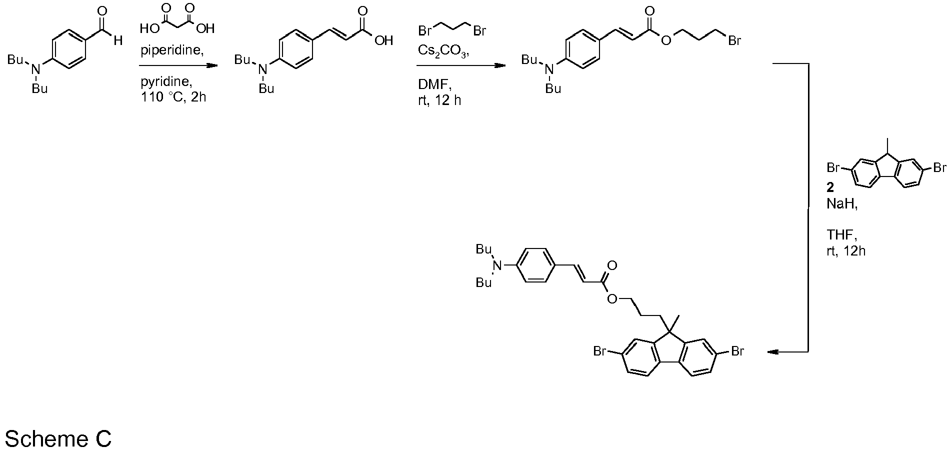

A person skilled in the art knows how to modify the sequence and the procedures given in Scheme C in order to obtain other monomers of the formula (III).

The invention is illustrated by the following examples without being limited thereby.

### Examples

All reactions requiring exclusion of oxygen and moisture were carried out in dry glassware under a dry and oxygen free argon or nitrogen atmosphere. For spectroscopic and analytic characterizations the following devices were available:
Analytical thin layer chromatography (TLC) was performed on Macherey-Nagel Polygram® SIL G/UV254 precoated sheets. Components were visualized by observation under UV irradiation (254 nm and 365 nm) or with aqueous KMnO₄ solution (1.5 g KMnO₄ 25 g Na₂CO₃, 250 mL H₂O).

Flash column chromatography was carried out on silica gel (0.032 mm-0.062 mm), purchased from Macherey, Nagel & Co.

Nuclear magnetic resonance (NMR) 1H NMR and 13C-NMR spectra were recorded at room temperature on Bruker Avance DRX 300 (300 MHz), Bruker Avance III 300 (300 MHz) and Bruker Avance III 600 (600 MHz). Chemical shifts (δ) are reported in parts per million (ppm) relative to residual un-deuterated solvent peak, coupling constants in Hz. The following abbreviations are used to indicate the signal multiplicity: s (singlet), d (doublet), t (triplet), q (quartet), m (multiplet), dd (doublet of doublet), br (broad). All NMR spectra were integrated and processed using Topspin 3.2 software.

High resolution mass spectrometry (HR-MS) were determined at the Organisch-Chemisches Institut of the University of Heidelberg under the direction of Dr. J. Gross. All methods were recorded on a Vakuum Generator ZAB-2F (EI+), Finnigan MAT TSQ 700 (ESI+) or JEOL JMS-700 (FAB+) spectrometer.

Absorption spectra were recorded on a Jasco UV-VIS V-660 or Jasco UV-VIS V-670 in solution or in solid state via a spin-coated glass-slide.

Emission spectra were recorded on a Jasco FP-6500 in solution or in solid state via a spin-coated glass-slide.

Gel Permeation Chromatography was performed with Jasco intelligent RI- and UV/Vis-detectors (RI-2031Plus, UV-2075Plus). Number- (Mn) and weight average (Mw) molecular weights and polydispersities (PDI) were determined by GPC versus polystyrene standards. Measurements were carried out at room temperature in chloroform (flow rate 1 mL/min) with PSS-SDV columns (8.0 mm x 30.0 mm, 5 µm particles, 102-, 103- and 105- Å pore size). All GPC-spectra were analyzed and processed by PSS WinGPC Unity Build 9350.

Solvents were purchased from the store of the Theoretikum or chemical store at the Organisch-Chemisches Institut of the University of Heidelberg and if necessary distilled prior use. All of the other absolute solvents were dried by a MB SPS-800 using drying columns.

Chemicals were either purchased from the chemical store at the Organisch-Chemisches Institut of the University of Heidelberg or from commercial laboratory suppliers. Reagents were used without further purification unless otherwise noted.

### Synthesis of a monomer

### (E)-3-(4-(dibutylamino)phenyl)acrylic acid:

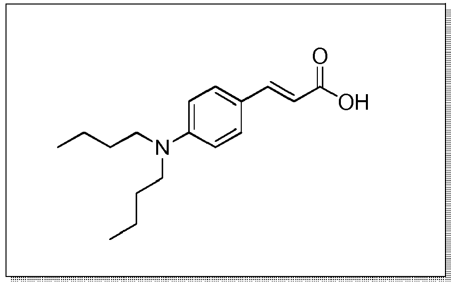

To malonic acid (2.46 g, 23.7 mmol, 1.10 equiv) in pyridine (5.00 ml) was added 4-(dibutylamino)benzaldehyde (5.00 g, 21.5 mmol, 1.00 equiv) and piperidine (2.30 ml, 23.7 mmol, 1.10 equiv). The reaction mixture was heated to 110°C for two hours until no more gas evolution was observed. The reaction mixture was then allowed to cool to ambient temperature and all solvent was removed under reduced pressure. The crude residue was dissolved in EtOAc and 1 M HCl was added until phase separation was observed. The organic layer was separated while the aqueous layer was washed with portions of EtOAc for several times. The combined organic layers were dried over Na₂SO₄, filtered and concentrated under reduced pressure. The obtained solid was dried in the vacuum to afford 5.40 g of the title compound as yellow solid (91 % yield).

NMR spectroscopy: ¹H-NMR (300 MHz, CDCl₃, δ): 11.58 (s, 1 H, OH), 7.73 (d, *J =* 15.7 Hz, 1 H, H-vinyl), 7.43 (d, *J=* 8.9 Hz, 2 H, H-Ar), 6.62 (d, *J=* 8.9 Hz, 2 H, H-Ar), 6.21 (d, *J=* 15.7 Hz, 1 H, H-vinyl), 3.48-3.08 (m, 4 H, CH₂), 1.71-1.49 (m, 4 H, CH₂), 1.42-1.30 (m, 4 H, CH₂), 0.96 (t, *J=* 7.19, 6 H, CH₃). ¹³C-NMR (76 MHz, CHCl₃, δ): 173.6, 150.0, 147.5, 130.4, 120.9, 111.2, 110.6, 50.7, 29.3, 20.3, 13.9. HRMS (El+) calcd for C₁₇H₂₅NO₂ [M+] 275.1885, found 275,1895.

### (E)-3-bromopropyl 3-(4-(dibutylamino)phenyl)acrylate:

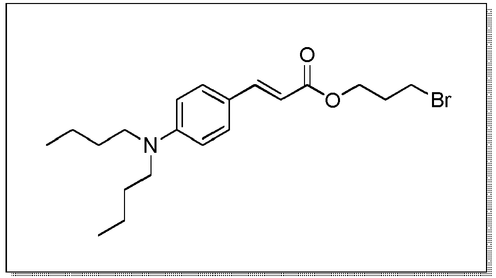

In an oven dried Schlenk flask (E)-3-(4-(dibutylamino)-phenyl)acrylic acid (5.50 g, 20.0 mmol, 1.00 equiv) was dissolved in dry DMF (160 ml). 1,3-dibromopropane (4.00 ml, 40 mmol, 2.00 equiv) was added and the reaction mixture was stirred vigorously. Caesium carbonate (13.0 g, 40.0 mmol, 2.00 equiv) was added in one portion and the turbid mixture was stirred under argon overnight. The solids were collected by filtration and washed with EtOAc (160 ml). Water was added to the filtrate and the organic layer was separated while the aqueous layer was washed for several times with EtOAc. The combined organic layers were dried over Na₂SO₄ and concentrated under reduced pressure. The crude product was purified via column chromatography on silica using mixtures of petroleum ether and ethyl acetate to afford 4.30 g of the title compound as yellow solid (54% yield).

NMR spectroscopy: ¹H-NMR (300 MHz, CDCl_{3,} δ): 7.63 (d, *J=* 15.8 Hz, 1 H, H-vinyl), 7.39 (d, *J* = 8.9 Hz, 2 H, H-Ar), 6.60 (d, *J*= 8.9 Hz, 2 H, H-Ar), 6.19 (d, *J*= 15.8 Hz, 1 H, H-vinyl), 4.32 (t, *J* = 6.5 Hz, 2 H, CH₂), 3.52 (t, *J* = 6.5 Hz, 2 H, CH₂), 3.38 - 3.23 (m, 4 H, CH₂), 2.24 (dt, *J* = 6.5 Hz, 2H,CH₂), 1.66 - 1.51 (m, 4H, CH₂), 1.45 - 1.18 (m, 4 H, CH₂), 0.96 (t, *J* = 7.2, 6 H, CH₃). ¹³C-NMR (76 MHz, CHCl₃, δ): 167.6, 149.7, 145.6, 129.9, 120.9, 111.1, 110.9, 103.5, 101.2, 61.6, 50.6, 31.9, 29.6, 29.3, 20.1, 18.9.
HRMS (EI+) calcd for C₂₀H₃₀BrNO₂ [M+] 395.1460, found 395.1438.

### (E)-3-(2,7-dibromo-9-methyl-9H-fluoren-9-yl)propyl 3-(4-(dibutylamino)phenyl)acrylate:

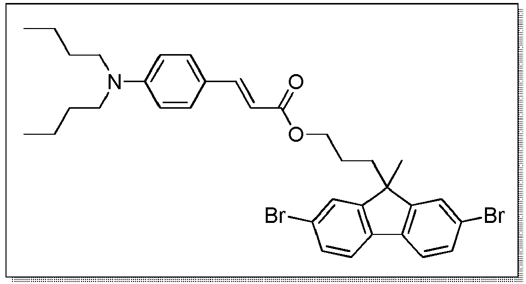

In an oven dried Schlenk flask 2,7-dibromo-9-methyl-9H-fluorene (2.20 g, 6.50 mmol, 1.00 equiv) was dissolved in anhydrous THF (20.0 ml). NaH (0.31g, 13.0 mmol, 2.00 equiv) was added in one portion and the reaction mixture was stirred for 30 minutes. (E)-3-bromopropyl-3-(4-(dibutylamino)phenyl)acrylate was dissolved in anhydrous THF (10.0 ml) and added dropwise to the reaction mixture. The reaction mixture was then stirred overnight under argon upon water (10.0 ml) was added carefully. The organic layer was separated and the aqueous layer was washed with EtOAc for several times. The combined organic layers were dried over Na₂SO₄ and concentrated under reduced pressure. The crude product was purified via column chromatography on silica using mixtures of petroleum ether and ethyl acetate to afford 3.10 g of the title compound as yellow oil (73% yield).

NMR spectroscopy: ¹H-NMR (300 MHz, CDCl₃, δ): 7.55 (d, *J=* 15.8 Hz, 1 H, H-vinyl), 7.53 (d, *J* = 8.1 Hz, 2 H, H-Ar), 7.52 (d, *J=* 2.0 Hz, 2 H, H-Ar),7.47 (dd *J*= 8.1 Hz, 2.0 Hz, 2 H, H-Ar), 7.38 (d, J = 8.8 Hz, 2 H, H-Ar), 6.59 (d, *J= 8.8* Hz, 2 H, H-Ar), 6.12 (d, *J*= 15.8 Hz, 1 H, H-vinyl), 3.93 (t, *J* = 6.60 Hz, 2 H, CH₂), 3.35 - 3.26 (m, 4 H, CH₂), 2.13 - 2.04 (m, 2 H, CH₂), 1.67 - 1.53 (m, 4 H, CH₂), 1.48 (s, 3 H, CH₃), 1.45 - 1.30 (m, 6 H, CH₂) 1,11 - 0,91 (t, *J* = 7.2 Hz 6 H, CH₃). ¹³C-NMR (76 MHz, CHCl₃, δ): 167.8, 153.1, 149.7, 145.3, 138.1, 130.5, 130.0, 126.2, 121.6, 121.4, 121.2, 111.4, 111.2 63.7, 50.9, 50.7, 36.5, 29.3, 26.5, 23.8, 20.3, 13.9. HRMS (EI+) calcd for C₃₄H₃₉Br₂NO₂ [M+] 651.1348, found 651.1368.

### 2,7-dibromo-9-methyl-9H-fluorene:

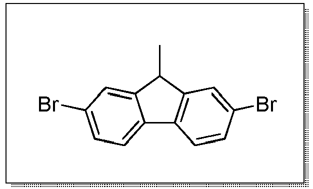

2,7-dibromo-9-methyl-9H-fluorene was prepared according to literature procedure. In an oven dried Schlenk flask 2,7-dibromofluorene (16.0 g, 50.0 mmol, 1.00 equiv) was dissolved in anhydrous THF (400 ml) and the obtained solution was cooled to -78°C. n-BuLi as 1.6M solution in hexanes (34.3 ml, 55.0 mmol, 1.10 equiv) was added over a periode of 5 minutes. The reaction mixture was stirred for 10 minutes at -78°C then Mel (3.40 ml, 55.0 mmol, 1.10 equiv) was added dropwise. The reaction was then allowed to warm to room temperature and is stirred for 4 days under argon until all reddish color has disappeared. Aqueous NH₄Cl solution and little aqueous NH₃ was added to quench the remaining Mel and the reaction was stirred for an additional 24 hours. The reaction mixture was then poured onto water (200 ml) and EtOAc (200ml) was added. The organic layer was separated and the aqueous phase was washed for several times with EtOAc. The combined organic layers were dried over Na₂SO₄ and concentrated under reduced pressure. Recrystallization from petroleum ether afforded 12.2 g of the title compound as off-white solid (72% yield)

NMR spectroscopy: ¹H-NMR (300 MHz, CDCl₃, δ): 7.63 (s, 2 H, H-Ar), 7.58 (d, *J=* 8.1 Hz, 2 H, H-Ar), 7.50 (d, *J =* 8.1 Hz, 2 H, H-Ar), 3.93 (q, *J =* 7.24 Hz, 1 H, CH), 1.51 (d, *J =* 7.24 Hz, 3 H, CH₃). ¹³C-NMR (76 MHz, CHCl₃, δ): 150.6, 138.5, 130.3, 127.5, 121.2, 42.4, 17.9. HRMS (EI+) calcd for C₁₄H₁₁Br₂ [M+H⁺] 336.9149 found 336.9053.

### Polymerisation examples

### Polymerisation A:

(E)-3-(2,7-dibromo-9-methyl-9H-fluoren-9-yl)propyl 3-(4-(dibutylamino)phenyl)acrylate (0.65 g, 1.00 mmol, 1.00 equiv) and 2,2'-(9,9-bis(2-ethylhexyl)-9H-fluorene-2,7-diyl)bis(4,4,5,5-tetramethyl-1,3,2-dioxaborolane) (0.64 g, 1.00 mmol, 1.00 equiv) were dissolved in THF (15.0 ml) and 2M K₂CO₃ (2.50 ml) was added with alliquat 336. The resulting mixture was flushed with argon for 30 minutes then Pd(PPh₃)₄ (0.06 g, 0.05 mmol, 0.10 equiv) was added and reaction tube was sealed. The mixture was then heated to 65°C under vigorous steering. After 48 hours phenylboronic acid (0.12 g, 1.00 mmol, 2.00 equiv) was added along with fresh catalyst. The reaction mixture was stirred for 12 hours until bromobenzene (0.10 ml, 1.00 mmol, 2.00 equiv) was added and the reaction was stirred for another 12 hours. Then the reaction was cooled to ambient temperature and precipitated by pouring onto MeOH (200 ml). The precipitate was filtered off redissolved in little CHCl₃. The obtained solution was added dropwise into a solution of MeOH (100 ml) and acetone (100 ml). The precipitate was collected by filtration redissolved in little CHCl₃ and precipitated in acetone (200 ml). The precipitate was filtered off and dried in the vacuum for 1 day to get the 350 mg of the final product (40% yield).
NMR spectroscopy: ¹H-NMR (500 MHz, CDCl₃, δ): 7.89 - 7.61 (m), 7.55 (d, *J* = 15.8 Hz), 7.33 (d, *J =* 8.8 Hz), 6.57 (d, *J =* 8.8 Hz), 6.12 (d, *J =* 15.8 Hz), 4.00 (br. s), 3.33 - 3.24 (m), 2.30 - 2.03 (br. m), 1.67 (br. s), 1.61 -1.54 (m), 1.40 - 1.29 (m), 1.00 - 0.72 (br. m), 0.72 - 0.50 (br. m).
GPC (CHCl₃): Mn = 21.0 kg/mol, Mw = 54.0 kg/mol, PDI =2.57

### Polymerisation B:

(E)-3-(2,7-dibromo-9-methyl-9H-fluoren-9-yl)propyl 3-(4-(dibutylamino)phenyl)acrylate (0.33 g, 0.50 mmol, 1.00 equiv), 2,7-dibromo-9,9-bis(2-ethylhexyl)-9H-fluorene (0.27 g, 0.50 mmol, 1.00 equiv) and 4,7-bis(4,4,5,5-tetramethyl-1,3,2-dioxaborolan-2-yl)benzo[c][1,2,5]thiadiazole (0.39 g, 1.00 mmol, 2.00 equiv) were dissolved in THF (15.0 ml) and 2M K₂CO₃ (2.50 ml) was added with aliquat 336. The resulting mixture was flushed with argon for 30 minutes then Pd(PPh₃)₄ (0.06 g, 0.05 mmol, 0.10 equiv) was added and reaction tube was sealed. The mixture was then heated to 65°C under vigorous steering. After 48 hours phenylboronic acid (0.12 g, 1.00 mmol, 2.00 eqiuv) was added along with fresh catalyst. The reaction mixture was stirred for 12 hours until bromobenzene (0.10 ml, 1.00 mmol, 2.00 equiv) was added and the reaction was stirred for another 12 hours. Then the reaction was cooled to ambient temperature and precipitated by pouring onto MeOH (200 ml). The precipitate was filtered off redissolved in little CHCl₃. The obtained solution was added dropwise into a solution of MeOH (100 ml) and acetone (100 ml). The precipitate was collected by filtration redissolved in little CHCl₃ and precipitated in acetone (200 ml). The precipitate was filtered off and dried in the vacuum for 1 day to get the 200 mg of the final product (35% yield).
NMR spectroscopy: ¹H-NMR (600 MHz, CDCl₃, δ): 8.25-7.81 *(m),7.54(d,J=* 15.8 Hz), 7.34-7.28 (m), 6.57 - 6.51 (m), 6.13 (d, J = 15.8 Hz), 4.04 (br. s), 3.30 - 3.22 (m), 2.48 - 1.97 (br. m), 1.75 (s), 1.60 - 1.50 (m), 1.39 - 1.29 (m), 1.10 - 0.75 (br. m), 0.62 (br. s).
GPC (CHCl₃): Mn = 17.5 kg/mol, Mw = 37.6 kg/mol, PDI =2.30

### Application examples

### Manufacturing of an OLED:

The term "polymer 1" as used hereinafter refers to the polymer obtained by the above "polymerisation A".

The term "polymer 2" as used hereinafter refers to the polymer obtained by the above "polymerisation B".

### FTIR spectroscopy

For IR spectroscopic investigations the materials were spin-coated on cleaned silicon substrates. The samples were measured in an evacuated Fourier-transform-infrared spectrometer with a liquid-nitrogen cooled Mercury-cadmium-telluride detector and a resolution of 4 cm⁻¹ in transmission geometry. All samples were investigated before illumination, after illumination, and after the rinsing step. When required for comparison, baseline corrections of the relative transmission spectra were conducted.

### UV-Vis elipsometry

The samples used for the IR spectroscopic investigations were also used for the determination of the layer thickness before illumination, after illumination, and after the rinsing step via UV-Vis elipsometry. For this purpose elipsometric measurements were performed with an incident angle of 70°. The achieved elipsometric Ψ- and Δ-spectra were fitted by using a simple Cauchy-layer approach for the organic material.

### OLED manufacturing

OLEDs were fabricated on ITO covered glass substrates. The ITO patterning was accomplished via a standard photolithography procedure and were finally cleaned in an ultrasonic bath using acetone (10 min) and ethanol (10 min). After spin-coating a 35 nm thick layer of the commercial PEDOT:PSS HIL (Heraeus Clevios Al 4083) and baking it for 10 minutes at 150°C, the EML layer a) polymer 1, b) polymer 2 was spin-coated. The EML was crosslinked by irradiation with light at 365 nm with doses of 72 to 120 J/cm² for 30 min. Subsequently the metal cathode was vacuum-deposited at a base pressure of 10⁻⁵ mbar consisting of Ca (5 nm and Ag (150 nm). The device was encapsulated using a self-adhesive encapsulation foil from 3M. LIV-curves and lifetime data were taken using a Botest LIV Functionality Test System.

## Claims

1. A polymer of the formula (I) or (II), 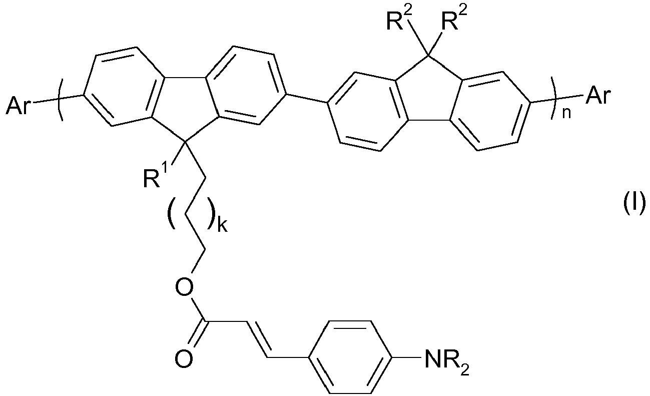 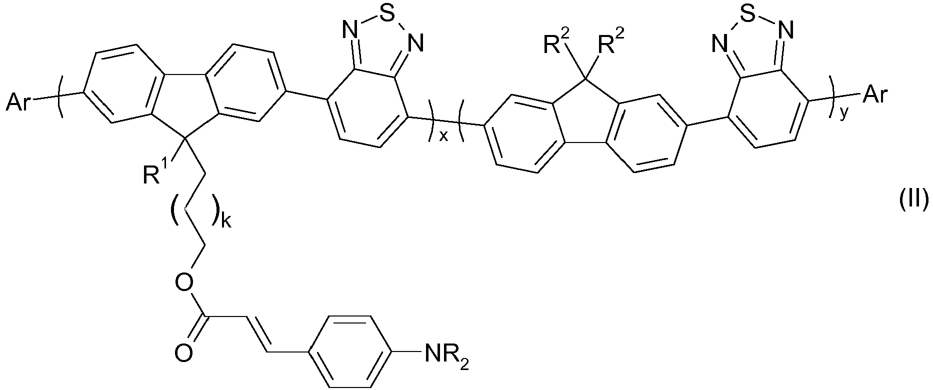 wherein
each R is independently a linear or branched C₁-C₁₀-alkyl, which is unsubstituted or substituted with 1, 2 or 3 substituents selected from the group consisting of halogen, CN, NO₂, OH, O(C₁-C₄-alkyl), NH₂, NH(C₁-C₄-alkyl), N(C₁-C₄-alkyl)₂, and phenyl; or phenyl, which is unsubstituted or substituted with 1, 2 or 3 substituents selected from the group consisting of halogen, CN, NO₂, OH, O(C₁-C₄-alkyl), NH₂, NH(C₁-C₄-alkyl), N(C₁-C₄-alkyl)₂, C₁-C₄-alkyl, and CF₃;
R¹ is a linear or branched C₁-C₁₀-alkyl, which is unsubstituted or substituted with 1, 2 or 3 substituents selected from the group consisting of halogen, CN, NO₂, OH, O(C₁-C₄-alkyl), NH₂, NH(C₁-C₄-alkyl), N(C₁-C₄-alkyl)₂, and phenyl;
each R² is independently a linear or branched C₁-C₁₀-alkyl, which is unsubstituted or substituted with 1, 2 or 3 substituents selected from the group consisting of halogen, CN, NO₂, OH, O(C₁-C₄-alkyl), NH₂, NH(C₁-C₄-alkyl), N(C₁-C₄-alkyl)₂, and phenyl;
each Ar is independently phenyl, which is unsubstituted or substituted with 1, 2 or 3 substituents selected from the group consisting of halogen, CN, NO₂, OH, O(C₁-C₄-alkyl), NH₂, NH(C₁-C₄-alkyl), N(C₁-C₄-alkyl)₂, C₁-C₄-alkyl, and CF₃; biphenyl, which is unsubstituted or substituted with 1, 2 or 3 substituents selected from the group consisting of halogen, CN, NO₂, OH, O(C₁-C₄-alkyl), NH₂, NH(C₁-C₄-alkyl), N(C₁-C₄-alkyl)₂, C₁-C₄-alkyl, and CF₃; or naphthyl, which is unsubstituted or substituted with 1, 2 or 3 substituents selected from the group consisting of halogen, CN, NO₂, OH, O(C₁-C₄-alkyl), NH₂, NH(C₁-C₄-alkyl), N(C₁-C₄-alkyl)₂, C₁-C₄-alkyl, and CF₃;
k is an integer from 1 to 8;
n is an integer from 5 to 1000;
x is an integer from 3 to 500;
y is an integer from 3 to 500.

2. The polymer according to claim 1, wherein
each R is independently a linear or branched C₁-C₁₀-alkyl, which is unsubstituted;
R¹ is a linear or branched C₁-C₁₀-alkyl, which is unsubstituted;
each R² is independently a linear or branched C₁-C₁₀-alkyl, which is unsubstituted;
each Ar is independently phenyl, which is unsubstituted or substituted with 1 or 2 substituents selected from the group consisting of CN, NO₂, O(C₁-C₄-alkyl), N(C₁-C₄-alkyl)₂, C₁-C₄-alkyl, and CF₃; unsubstituted biphenyl; or unsubstituted naphthyl;
k is an integer from 1 to 4;
n is an integer from 10 to 1000;
x is an integer from 5 to 500;
y is an integer from 5 to 500.

3. The polymer according to claim 1 or 2, wherein
each R is independently a linear or branched C₁-C₆-alkyl, which is unsubstituted;
R¹ is a linear or branched C₁₋C₄-alkyl, which is unsubstituted;
each R² is independently a linear or branched C₅-C₁₀-alkyl, which is unsubstituted;
each Ar is independently phenyl, which is unsubstituted or substituted with 1 or 2 substituents selected from the group consisting of CN, O(C₁-C₄-alkyl), N(C₁-C₄-alkyl)₂, C₁-C₄-alkyl, and CF₃;
k is 1 or 2;
n is an integer from 10 to 600;
x is an integer from 5 to 300;
y is an integer from 5 to 300.

4. The polymer according to any one of claims 1 to 3, wherein the ratio of x to y is in the range of from 0.8 to 1.2.

5. The polymer according to any one of claims 1 to 3, wherein the polymer is a polymer of the formula (I).

6. The polymer according to any one of claims 1 to 4, wherein the polymer is a polymer of the formula (II).

7. A method for cross-linking the polymer of any one of claims 1 to 6, comprising the following steps:
(i) providing a polymer of any one of claims 1 to 6;
(ii) irradiating the polymer of step (i) with light of a wavelength in the range of from 320 to 400 nm to obtain a cross-linked polymer.

8. The method according to claim 7, wherein step (ii) is carried out with light of a wavelength in the range of from 350 to 380 nm.

9. The method according to claim 7 or 8, further comprising the following step:
(iii) removing polymers which were not cross-linked or which were only cross-linked to a small degree by rinsing with one or more solvents.

10. A cross-linked polymer obtainable by the method of any one of claims 7 to 9.

11. A monomer of the formula (III), 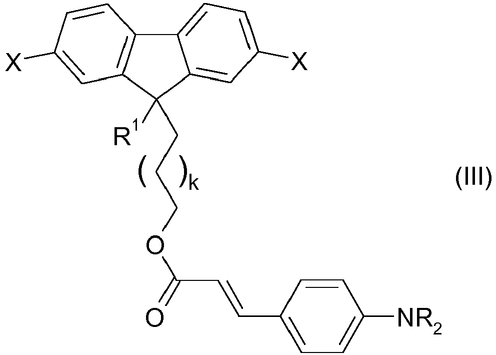 wherein
each X is independently halogen or OS(O)₂CF₃;
each R is independently a linear or branched C₁-C₁₀-alkyl, which is unsubstituted or substituted with 1, 2 or 3 substituents selected from the group consisting of halogen, CN, NO₂, OH, O(C₁-C₄-alkyl), NH₂, NH(C₁-C₄-alkyl), N(C₁-C₄-alkyl)₂, and phenyl; or phenyl, which is unsubstituted or substituted with 1, 2 or 3 substituents selected from the group consisting of halogen, CN, NO₂, OH, O(C₁-C₄-alkyl), NH₂, NH(C₁-C₄-alkyl), N(C₁-C₄-alkyl)₂, C₁-C₄-alkyl, and CF₃;
R¹ is a linear or branched C₁-C₁₀-alkyl, which is unsubstituted or substituted with 1, 2 or 3 substituents selected from the group consisting of halogen, CN, NO₂, OH, O(C₁-C₄-alkyl), NH₂, NH(C₁-C₄-alkyl), N(C₁-C₄-alkyl)₂, and phenyl;
k is an integer from 1 to 8.

12. The monomer according to claim 11, wherein
each X is independently Br, I, or OS(O)₂CF₃;
each R is independently a linear or branched C₁-C₆-alkyl, which is unsubstituted;
R¹ is a linear or branched C₁-C₄-alkyl, which is unsubstituted;
k is 1 or 2.

13. An electronic device comprising the cross-linked polymer of claim 10.

## Patentansprüche

1. Polymer der Formel (I) oder (II), 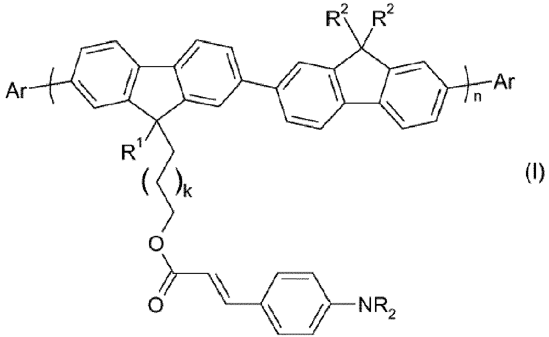 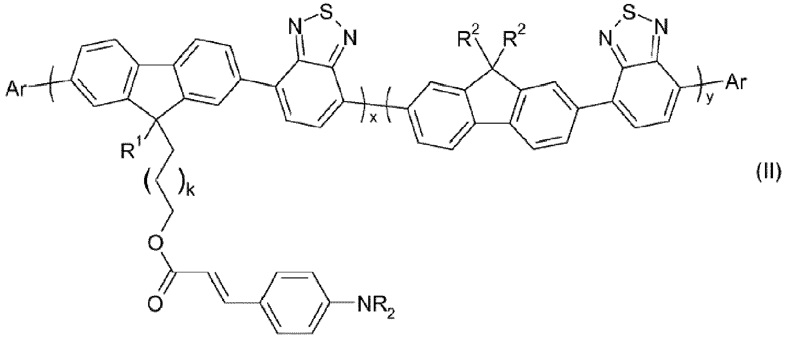 wobei
R jeweils unabhängig für ein lineares oder verzweigtes C₁-C₁₀-Alkyl, das unsubstituiert oder durch 1, 2 oder 3 Substituenten aus der Gruppe bestehend aus Halogen, CN, NO₂, OH, O(C₁-C₄-Alkyl), NH₂, NH(C₁-C₄-Alkyl), N(C₁-C₄-Alkyl)₂ und Phenyl substituiert ist; oder
Phenyl, das unsubstituiert oder durch 1, 2 oder 3 Substituenten aus der Gruppe bestehend aus Halogen, CN, NO₂, OH, O(C₁-C₄-Alkyl), NH₂, NH(C₁-C₄-Alkyl), N(C₁-C₄-Alkyl)₂, C₁-C₄-Alkyl und CF₃ substituiert ist; steht;
R¹ für ein lineares oder verzweigtes C₁-C₁₀-Alkyl, das unsubstituiert oder durch 1, 2 oder 3 Substituenten aus der Gruppe bestehend aus Halogen, CN, NO₂, OH, O(C₁-C₄-Alkyl), NH₂, NH(C₁-C₄-Alkyl), N(C₁-C₄-Alkyl)₂ und Phenyl substituiert ist, steht;
R² jeweils für ein lineares oder verzweigtes C₁-C₁₀-Alkyl, das unsubstituiert oder durch 1, 2 oder 3 Substituenten aus der Gruppe bestehend aus Halogen, CN, NO₂, OH, O(C₁-C₄-Alkyl), NH₂, NH(C₁-C₄-Alkyl), N(C₁-C₄-Alkyl)₂ und Phenyl substituiert ist, steht;
Ar jeweils unabhängig für Phenyl, das unsubstituiert oder durch 1, 2 oder 3 Substituenten aus der Gruppe bestehend aus Halogen, CN, NO₂, OH, O(C₁-C₄-Alkyl), NH₂, NH(C₁-C₄-Alkyl), N(C₁-C₄-Alkyl)₂, C₁-C₄-Alkyl und CF₃ substituiert ist;
Biphenyl, das unsubstituiert oder durch 1, 2 oder 3 Substituenten aus der Gruppe bestehend aus Halogen, CN, NO₂, OH, O(C₁-C₄-Alkyl), NH₂, NH(C₁-C₄-Alkyl), N(C₁-C₄-Alkyl)₂, C₁-C₄-Alkyl und CF₃ substituiert ist; oder
Naphthyl, das unsubstituiert oder durch 1, 2 oder 3 Substituenten aus der Gruppe bestehend aus Halogen, CN, NO₂, OH, O(C₁-C₄-Alkyl), NH₂, NH(C₁-C₄-Alkyl), N(C₁-C₄-Alkyl)₂, C₁-C₄-Alkyl und CF₃ substituiert ist; steht;
k für eine ganze Zahl von 1 bis 8 steht;
n für eine ganze Zahl von 5 bis 1000 steht;
x für eine ganze Zahl von 3 bis 500 steht;
y für eine ganze Zahl von 3 bis 500 steht.

2. Polymer nach Anspruch 1, wobei
R jeweils unabhängig für ein lineares oder verzweigtes C₁-C₁₀-Alkyl, das unsubstituiert ist, steht;
R¹ für ein lineares oder verzweigtes C₁-C₁₀-Alkyl, das unsubstituiert ist, steht;
R² jeweils für ein lineares oder verzweigtes C₁-C₁₀-Alkyl, das unsubstituiert ist, steht;
Ar jeweils unabhängig für Phenyl, das unsubstituiert oder durch 1 oder 2 Substituenten aus der Gruppe bestehend aus CN, NO₂, O(C₁-C₄-Alkyl), N(C₁-C₄-Alkyl)₂, C₁-C₄-Alkyl und CF₃ substituiert ist; unsubstituiertes Biphenyl oder unsubstituiertes Naphthyl steht;
k für eine ganze Zahl von 1 bis 4 steht;
n für eine ganze Zahl von 10 bis 1000 steht;
x für eine ganze Zahl von 5 bis 500 steht;
y für eine ganze Zahl von 5 bis 500 steht.

3. Polymer nach Anspruch 1 oder 2, wobei
R jeweils unabhängig für ein lineares oder verzweigtes C₁-C₆-Alkyl, das unsubstituiert ist, steht;
R¹ für ein lineares oder verzweigtes C₁-C₄-Alkyl, das unsubstituiert ist, steht;
R² jeweils für ein lineares oder verzweigtes C₅-C₁₀-Alkyl, das unsubstituiert ist, steht;
Ar jeweils unabhängig für Phenyl, das unsubstituiert oder durch 1 oder 2 Substituenten aus der Gruppe bestehend aus CN, O(C₁-C₄-Alkyl), N(C₁-C₄-Alkyl)₂, C₁-C₄-Alkyl und CF₃ substituiert ist, steht;
k für 1 oder 2 steht;
n für eine ganze Zahl von 10 bis 600 steht;
x für eine ganze Zahl von 5 bis 300 steht;
y für eine ganze Zahl von 5 bis 300 steht.

4. Polymer nach einem der Ansprüche 1 bis 3, wobei das Verhältnis von x zu y im Bereich von 0,8 bis 1,2 liegt.

5. Polymer nach einem der Ansprüche 1 bis 3, wobei es sich bei dem Polymer um ein Polymer der Formel (I) handelt.

6. Polymer nach einem der Ansprüche 1 bis 4, wobei es sich bei dem Polymer um ein Polymer der Formel (II) handelt.

7. Verfahren zur Vernetzung des Polymers nach einem der Ansprüche 1 bis 6, bei dem man:
(i) ein Polymer nach einem der Ansprüche 1 bis 6 bereitstellt;
(ii) das Polymer von Schritt (i) mit Licht einer Wellenlänge im Bereich von 320 bis 400 nm bestrahlt, wobei man ein vernetztes Polymer erhält.

8. Verfahren nach Anspruch 7, bei dem Schritt (ii) mit Licht einer Wellenlänge im Bereich von 350 bis 380 nm durchgeführt wird.

9. Verfahren nach Anspruch 7 oder 8, bei dem man ferner:
(iii) nicht vernetzte oder nur zu einem geringen Grad vernetzte Polymere durch Spülen mit einem oder mehreren Lösungsmitteln entfernt.

10. Vernetztes Polymer, das durch das Verfahren nach einem der Ansprüche 7 bis 9 erhältlich ist.

11. Monomer der Formel (III), 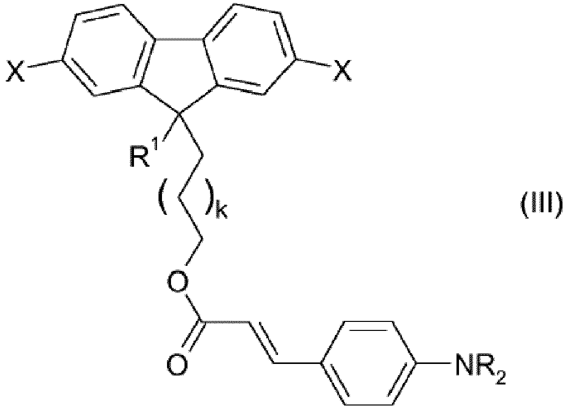 wobei
X jeweils unabhängig für Halogen oder OS(O)₂CF₃ steht;
R jeweils unabhängig für ein lineares oder verzweigtes C₁-C₁₀-Alkyl, das unsubstituiert oder durch 1, 2 oder 3 Substituenten aus der Gruppe bestehend aus Halogen, CN, NO₂, OH, O(C₁-C₄-Alkyl), NH₂, NH(C₁-C₄-Alkyl), N(C₁-C₄-Alkyl)₂ und Phenyl substituiert ist; oder Phenyl, das unsubstituiert oder durch 1, 2 oder 3 Substituenten aus der Gruppe bestehend aus Halogen, CN, NO₂, OH, O(C₁-C₄-Alkyl), NH₂, NH(C₁-C₄-Alkyl), N(C₁-C₄-Alkyl)₂, C₁-C₄-Alkyl und CF₃ substituiert ist; steht;
R¹ für ein lineares oder verzweigtes C₁-C₁₀-Alkyl, das unsubstituiert oder durch 1, 2 oder 3 Substituenten aus der Gruppe bestehend aus Halogen, CN, NO₂, OH, O(C₁-C₄-Alkyl), NH₂, NH(C₁-C₄-Alkyl), N(C₁-C₄-Alkyl)₂ und Phenyl substituiert ist, steht;
k für eine ganze Zahl von 1 bis 8 steht.

12. Monomer nach Anspruch 11, wobei
X jeweils unabhängig für Br, I oder OS(O)₂CF₃ steht;
R jeweils unabhängig für ein lineares oder verzweigtes C₁-C₆-Alkyl, das unsubstituiert ist, steht;
R¹ für ein lineares oder verzweigtes C₁-C₄-Alkyl, das unsubstituiert ist, steht;
k für 1 oder 2 steht.

13. Elektronische Vorrichtung, umfassend das vernetzte Polymer gemäß Anspruch 10.

## Revendications

1. Polymère de formule (I) ou (II), 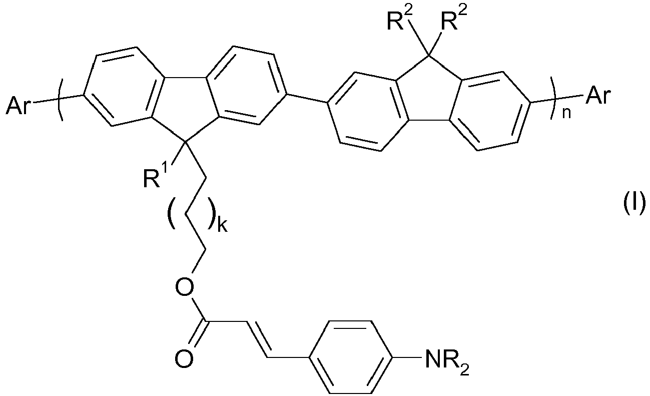 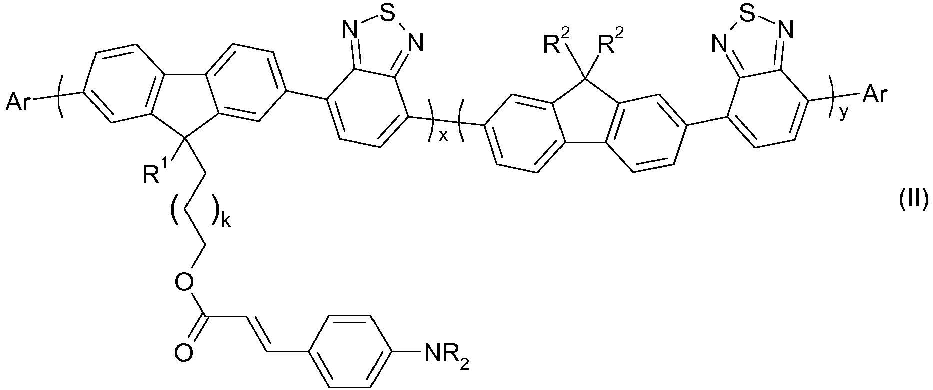 où
chacun des radicaux R représente indépendamment un groupement alkyle en C₁-C₁₀ linéaire ou ramifié, qui est non substitué ou substitué par 1, 2 ou 3 substituants choisis dans le groupe constitué par les atomes d'halogène et les groupements CN, NO₂, OH, 0(alkyle en C₁-C₄) , NH₂, NH (alkyle en C₁-C₄), N(alkyle en C₁-C₄)₂ et phényle ; ou
phényle, qui est non substitué ou substitué par 1, 2 ou 3 substituants choisis dans le groupe constitué par les atomes d'halogène et les groupements CN, NO₂, OH, O(alkyle en C₁-C₄), NH₂, NH(alkyle en C₁-C₄), N(alkyle en C₁-C₄)₂, alkyle en C₁-C₄ et ;
R¹ représente un groupement alkyle en C₁-C₁₀ linéaire ou ramifié, qui est non substitué ou substitué par 1, 2 ou 3 substituants choisis dans le groupe constitué par les atomes d'halogène et les groupements CN, NO₂, OH, O(alkyle en C₁-C₄), NH₂, NH(alkyle en C₁-C₄), N(alkyle en C₁-C₄)₂ et phényle ;
chacun des radicaux R² représente indépendamment un groupement alkyle en C₁-C₁₀ linéaire ou ramifié, qui est non substitué ou substitué par 1, 2 ou 3 substituants choisis dans le groupe constitué par les atomes d'halogène et les groupements CN, NO₂, OH, 0(alkyle en C₁-C₄), NH₂, NH(alkyle en C₁-C₄), N(alkyle en C₁-C₄)₂ et phényle ;
chacun des radicaux Ar représente indépendamment un groupement phényle, qui est non substitué ou substitué par 1, 2 ou 3 substituants choisis dans le groupe constitué par les atomes d'halogène et les groupements CN, NO₂, OH, O(alkyle en C₁-C₄), NH₂, NH(alkyle en C₁-C₄), N(alkyle en C₁-C₄)₂, alkyle en C₁-C₄ et CF₃ ; biphényle, qui est non substitué ou substitué par 1, 2 ou 3 substituants choisis dans le groupe constitué par les atomes d'halogène et les groupements CN, NO₂, OH, O(alkyle en C₁-C₄), NH₂, NH(alkyle en C₁-C₄), N(alkyle en C₁-C₄)₂, alkyle en C₁-C₄ et CF₃ ; ou naphtyle, qui est non substitué ou substitué par 1, 2 ou 3 substituants choisis dans le groupe constitué par les atomes d'halogène et les groupements, CN, NO₂, OH, O(alkyle en C₁-C₄), NH₂, NH(alkyle en C₁-C₄), N(alkyle en C₁-C₄)₂, alkyle en C₁-C₄ et CF₃ ;
k est un entier compris entre 1 et 8 ;
n est un entier compris entre 5 et 1000 ;
x est un entier compris entre 3 et 500 ;
y est un entier compris entre 3 et 500.

2. Polymère selon la revendication 1, où
chacun des radicaux R représente indépendamment un groupement alkyle en C₁-C₁₀ linéaire ou ramifié, qui est non substitué ;
R¹ représente un groupement alkyle en C₁-C₁₀ linéaire ou ramifié, qui est non substitué ;
chacun des radicaux R² représente indépendamment un groupement alkyle en C₁-C₁₀ linéaire ou ramifié, qui est non substitué ;
chacun des radicaux Ar représente indépendamment un groupement phényle, qui est non substitué ou substitué par 1 ou 2 substituants choisis dans le groupe constitué par les groupements CN, NO₂, O(alkyle en C₁-C₄), N(alkyle en C₁-C₄)₂, alkyle en C₁-C₄ et CF₃ ; biphényle non substitué ; ou naphtyle non substitué ;
k est un entier compris entre 1 et 4 ;
n est un entier compris entre 10 et 1000 ;
x est un entier compris entre 5 et 500 ;
y est un entier compris entre 5 et 500.

3. Polymère selon la revendication 1 ou 2, où chacun des radicaux R représente indépendamment un groupement alkyle en C₁-C₆ linéaire ou ramifié, qui est non substitué ;
R¹ représente un groupement alkyle en C₁-C₄ linéaire ou ramifié, qui est non substitué ;
chacun des radicaux R² représente indépendamment un groupement alkyle en C₅-C₁₀ linéaire ou ramifié, qui est non substitué ;
chacun des radicaux Ar représente indépendamment un groupement phényle, qui est non substitué ou substitué par 1 ou 2 substituants choisis dans le groupe constitué par les groupements CN, O(alkyle en C₁-C₄), N(alkyle en C₁-C₄)₂, alkyle en C₁-C₄ et CF₃ ;
k est égal à 1 ou à 2 ;
n est un entier compris entre 10 et 600 ;
x est un entier compris entre 5 et 300 ;
y est un entier compris entre 5 et 300.

4. Polymère selon l'une quelconque des revendications 1 à 3, où le rapport de x sur y est compris dans l'intervalle allant de 0,8 à 1,2.

5. Polymère selon l'une quelconque des revendications 1 à 3, où le polymère est un polymère de formule (I).

6. Polymère selon l'une quelconque des revendications 1 à 4, où le polymère est un polymère de formule (II).

7. Procédé de réticulation du polymère selon l'une quelconque des revendications 1 à 6, comprenant les étapes suivantes :
(i) le fait de se munir d'un polymère selon l'une quelconque des revendications 1 à 6 ;
(ii) l'irradiation du polymère de l'étape (i) par une lumière d'une longueur d'onde comprise dans l'intervalle allant de 320 à 400 nm pour obtenir un polymère réticulé.

8. Procédé selon la revendication 7, où l'étape (ii) est mise en oeuvre avec une lumière d'une longueur d'onde comprise dans l'intervalle allant de 350 à 380 nm.

9. Procédé selon la revendication 7 ou 8, comprenant en outre l'étape suivante :
(iii) l'élimination des polymères qui ne sont pas réticulés ou qui ne sont réticulés qu'à un faible degré par rinçage par un ou plusieurs solvants.

10. Polymère réticulé pouvant être obtenu par le procédé selon l'une quelconque des revendications 7 à 9.

11. Monomère de formule (III), 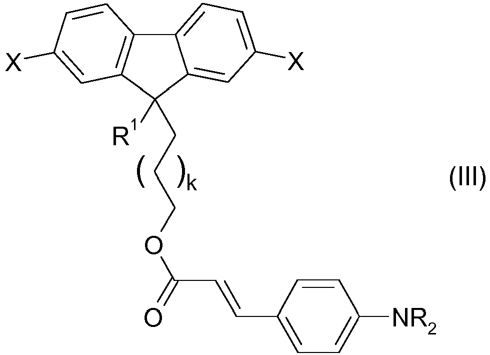 où
chacun des radicaux X représente indépendamment un atome d'halogène ou un groupement OS(O)₂CF₃ ;
chacun des radicaux R représente indépendamment un groupement alkyle en C₁-C₁₀ linéaire ou ramifié, qui est non substitué ou substitué par 1, 2 ou 3 substituants choisis dans le groupe constitué par les atomes d'halogène et les groupements CN, NO₂, OH, 0(alkyle en C₁-C₄), NH₂, NH(alkyle en C₁-C₄), N(alkyle en C₁-C₄)₂ et phényle ; ou
phényle, qui est non substitué ou substitué par 1, 2 ou 3 substituants choisis dans le groupe constitué par les atomes d'halogène et les groupements CN, NO₂, OH, O(alkyle en C₁-C₄), NH₂, NH(alkyle en C₁-C₄), N(alkyle en C₁-C₄)₂, alkyle en C₁-C₄ et CF₃ ;
R¹ représente un groupement alkyle en C₁-C₁₀ linéaire ou ramifié, qui est non substitué ou substitué par 1, 2 ou 3 substituants choisis dans le groupe constitué par les atomes d'halogène et les groupements CN, NO₂, OH, O(alkyle en C₁-C₄), NH₂, NH(alkyle en C₁-C₄), N(alkyle en C₁-C₄)₂ et phényle ;
k est un entier compris entre 1 et 8.

12. Monomère selon la revendication 11, où
chacun des radicaux X représente indépendamment Br, I ou un groupement OS(O)₂CF₃ ;
chacun des radicaux R représente indépendamment un groupement alkyle en C₁-C₆ linéaire ou ramifié, qui est non substitué ;
R¹ représente un groupement alkyle en C₁-C₄ linéaire ou ramifié, qui est non substitué ;
k est égal à 1 ou à 2.

13. Dispositif électronique comprenant le polymère réticulé selon la revendication 10.
